# EUROPEAN PATENT APPLICATION

(11) **EP 2 816 530 A1**
(43) Date of publication of application: **24.12.2014**
(21) Application number: 14151006.5
(22) Date of filing: 13.01.2014
(51) Int. Cl.: G06T 15/00, G06T 19/00, G06Q 30/02

(54) **Method for updating three-dimensional shopping platform**

(30) Priority: 17.06.2013 CN 201310240599; 31.12.2013 WO PCT/CN2013/091055
(71) Applicant: Spreadtrum Communications (Shanghai) Co., Ltd., Zhangjiang High Tech Park Podong District Shanghai 201203 (CN)
(72) Inventor: Xia, Lu, 201203 Shanghai (CN); Jin, Hengzhuang, 201203 Shanghai (CN); Liu, Haipeng, Shanghai 201203 (CN)
(74) Representative: Handsome I.P. Ltd

(57) **Abstract**

The present invention discloses a method for updating three-dimensional shopping platform, especially to a method for updating the data of the complicated display interface. The three-dimensional shopping platform is displayed through a three-dimensional display system on the mobile terminal shopping platform. The three-dimensional shopping platform system comprises: a three-dimensional model, a display module, a motion capturing module and a visual angle switching module. The visual angle switching module is respectively connected to the display module and the motion capturing module. The display module is defined with a predetermined size by the display module. And the method further comprises a data updating module, data updating module changes with the display interface, it updates the shop information and Commodity information in the first display area, and the second display in model unit is displayed in the display interface. The present invention technical effect are as follows: it issues the relevant information on the three-dimensional shopping platform and achieves the update connection between the publishing platforms, and improve the convenience and efficiency of the three-dimensional shopping platform.

## Description

### Technical Field

The present invention relates to a data update method of complex display interface , more specifically, relates to a method for updating three-dimensional shopping platform.

### BACKGROUND OF THE INVENTION

With the rapid development of IT technology, the indoor shopping method by network shopping platform has been widely accepted, and became a new economic growth point of consumption. Compared with the traditional shopping method, shopping through the network platform has a lot of advantages. For example, when shopping through the network platform, it is quick to find the related products then to select and compare as long as you input the desired product on the online platform, while the traditional shopping sometimes can not do this. After spending a lot of time and energy, desired products could not be found in the traditional method. The current online shopping platform commonly uses two-dimensional display mode. This display mode is a certain intuitive and can quickly provides users with the information of online platform, online stores and products. However, on the other hand, this information display also has some defects. For example, it is just a planar information display and usually illustrates by comments of pictures, and writings and notes. So it can not completely present the information of products to users such as the three-dimensional appearance. This affects the complete understanding of products for users, which can easily lead to misunderstandings about the product. Moreover, the display of the current online shopping platform, for using two-dimensional display, usually has the problem such as page switching, which may easily make users inconvenient in the shopping process. It is difficult to give users a physical shopping experience. On the other hand, when online shopping by two-dimensional display interface, users need to enter the search command by buttoning or touching the screen and to select products. Alternatively, user can purchase via clicking the mouse or touching the screen, which are complicated. Therefore, a three-dimensional shopping platform is required to reduce operating inconvenience of the traditional two-dimensional display environment and to improve shopping experience of users in the network shopping, and a update method of three-dimensional shopping platform is also required in order to display and update the content of the data of three-dimensional shopping platform. It enhances the commodity information timeliness of three-dimensional shopping platform.

### Summary of the invention

Due to the above technical problems, the present invention provides a method for updating three-dimensional shopping platform, so as to achieve the real-time updating of content in the three-dimensional shopping platform and to improve the shopping system efficiency.

A method for updating three-dimensional shopping platform, the three-dimensional shopping platform is displayed on a mobile terminal through a three-dimensional shopping platform display system, wherein the three-dimensional shopping platform display system comprises:
a three-dimensional model;
a display module;
a motion capturing module, and
a visual angle switching module, wherein, the visual angle switching module is respectively connected to the display module and the motion capturing module;
the display interface is defined with a predetermined size by the display module;
the relative position of the display interface and the three-dimensional model is changed by the motion capturing module in accordance with the user operation, then corresponding command instructions is sent to the visual angle switching module; the three-dimensional model is adjusted by the visual angle switching module through a preconfigured strategy in accordance with the command instructions of the motion capturing module;
the different image data in the display interface is displayed by the visual angle switching module; the image data is a plane projection of the three-dimensional model in the display interface;
the memory module is provided which is preconfigured with a model unit of the three-dimensional shopping platform and the basic data for assembling the three-dimensional model; the different three-dimensional models are assembled by the three-dimensional shopping platform display system according to the basic data and the model unit;
the three-dimensional model is used for indicating virtual block of the three-dimensional shopping platform; the model unit is used for indicating the virtual shop of the three-dimensional shopping platform;
the model unit further includes first display area for displaying shop information and/or second display area for displaying the multiple second three-dimensional models; the first display area and the second display area are adjusted based on the three-dimensional model; the second three-dimensional model is used for presenting the commodity in the three-dimensional shopping platform display system; the commodity information is presented in the second display area; and
a data updating module is provided which is changed with the display content that presented in the display interface, the data updating module successively updates the information of the shop and the commodity which is displayed on the first display area and the second display area of the model unit in the display interface.

Preferably, the data updating module is connected to a remote server through a communication module, the update data is achieved by the data updating module from the remote server, and the update data is stored in the memory module through the data updating module.

Preferably, the memory module also stores a first data series, a second data series and a third data series;
the first data series stores a first class information relevant to a virtual block and the shop information of each virtual shop;
the second data series consists of the multiple subclasses in the second class information;
the third data series is used for storing the commodity information of each virtual shop and for each of the subclass in the second data series.

Preferably, the first class information comprises the virtual shop's name and the updated information;
the second class information comprises the update information of the virtual shop commodity and the promotion information.

Preferably, when the image display interface presents the virtual block, it updates the first data series relevant to the current virtual block by the first update setting, and the first data series relevant to the virtual shop's name's information and the updated information are displayed in the specific location of the first display area in the model units of the current image display interface.

Preferably, when the image display interface displays the virtual block, and the three-dimensional shopping platform system determines that the operation of the users matches the preconfigured operation to a model unit by the motion capturing module,

the image display interface updates the subclass of the second class information relevant to the operated virtual shop in the second data series by the second update setting, and a third display area is added onto the operated model unite where the second class information of the virtual shop relevant to the subclass of the second information.

Preferably, when the image display interface displays the part of the virtual block, it updates the subclass of the second class information relevant to the current virtual shop in the second data series by the second update setting, and the updated commodity information and promotion information relevant to the subclass of the second class information are displayed in the specific location of the first display area in the model units of the current image display interface.

Preferably, when the image display interface displays the inside scene of the virtual shop, it updates the third data series relevant to the virtual commodity in the image display interface by the third update setting, and the commodity information relevant to the third data series is displayed in the specific location of the second display area in current image display interface.

Preferably, the three-dimensional shopping platform display system presents the updated information of virtual shop in the specific location of the first display area in the model units relevant to each virtual shop via the color scheme.

Preferably, the three-dimensional shopping platform system displays the information of the virtual shop's name in the top area of the corresponding model units in the first display area.

Preferably, the first update setting comprises:
the three-dimensional shopping platform system searches the relevant updating label of the first update data series in the remote server by the data updating module;
when the updating label relevant to the first data series is found in the remote server, the mobile terminal sends an updating request relevant to the first data series to the remote server, and the server sends out the update data;
when the updating label relevant to the first data series is not found in the remote server, the three-dimensional shopping platform system reads the first data series stored in the mobile terminal;
when the first data series is not stored in the mobile terminal, the terminal sends an updating request of the first data series to the remote server, and the server sends out the update data.

Preferably, wherein the second update setting comprises:
the three-dimensional shopping platform system searches the relevant updating label of the subclass of the second class information of the displayed virtual shop in the image display interface in the remote server by the data updating module;
when the updating label relevant to the subclass of the second class information is found in the remote server, the mobile terminal sends the updating request relevant to the subclass of the second class information to the remote server, and the server sends out the update data;
when the updating label relevant to the subclass of the second class information is not found in the remote server, the three-dimensional shopping platform system reads the subclass of the second class information stored in the mobile terminal;
when the subclass of the second class information is not stored in the mobile terminal, the mobile terminal sends an updating request of the subclass of the second class information to the remote server, and the server sends out the update data.

Preferably, the preconfigured operation is the sliding operation with the operation trail upward after clicking the model units relevant to the virtual shop.

Preferably, a third display area is added into the three-dimensional shopping platform system by changing the outlook of model units relevant to the virtual shop.

Preferably, the third update setting comprises that:
the three-dimensional image display system searches the relevant updating label of the third update data series in the remote server by the data updating module;
when the updating label relevant to the third data series is found in the remote server, the mobile terminal sends an updating request relevant to the third data series to the remote server, and the server sends out the update data;
when the updating label relevant to the third data series is not found in the remote server, the three-dimensional shopping platform system reads the third data series stored in the mobile terminal;
when the third data series is not stored in the mobile terminal, the terminal sends an updating request of the third data series to the remote server, and the server sends out the update data.

The effects of the present invention technical are as follows, The three-dimensional shopping platform of the present invention can issue the relevant information and achieve the update connection between the publishing platforms, and improve the convenience and efficiency of the three-dimensional shopping platform. The update content is displayed on the three-dimensional display shopping platform, which results a intuitive appearance of update contents and improves its visual effect and reality, as well as improves the network shopping experience.

### Brief Descriptions of the Drawings

Those skilled in the art will appreciate the improvements and advantages that derive from the present invention upon reading the following detailed description, claims, and drawings, in which:
Figure 1 is structure diagram of the method for updating the three-dimensional shopping platform;
Figure 2 is structure diagram of data model of update method of three-dimensional shopping platform;
Figure 3 is schematic diagram of the preconfigured operation of the model unit of three-dimensional shopping platform.

### Descriptions of the preferred Embodiment

The present invention will be further illustrated in combination with the following Figures and embodiments, but it should not be deemed as limitation of the present invention.

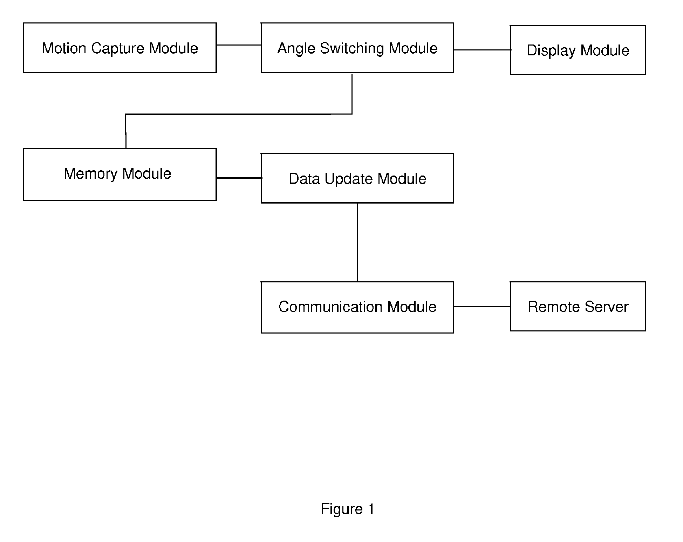

The present invention discloses a method for updating three-dimensional shopping platform, the three-dimensional shopping platform is displayed on mobile terminal through a three-dimensional shopping platform display system. The mobile terminal includes a processing device such as a mobile phone, a notebook, a panel computer. As shown in Figure 1, the three-dimensional shopping platform display system comprises: a three-dimensional model, a display module, a motion capturing module, a visual angle switching module; and a memory module and a data updating module. The visual angle switching module is respectively connected to the display module and the motion capturing module. The data updating module is respectively connected to the memory module and the remote server through the communication module.

The display interface is defined with a predetermined size by the display module so as to present the three-dimensional shopping platform to the user, and enables the users to obtain the three-dimensional visual shopping experience. The size thereof can be adjusted according to the setting of the user, where the maximum size is the size of the display screen in the mobile terminal.

In the embodiment of the invention, the motion capturing module is used for capturing the operation action of the user and for changing the relative position of the image display interface to the three-dimensional model thereby, for sending a command instruction to the view switching module which adjusts the three-dimensional model, projects to the display interface and realizes the shift of the views. The user's operation action could be the clicking or double-clicking on the touch screen, the sending instruction by the keyboard, the zooming in and zooming out by two fingers, or the capturing the moving, the rotating, or the overturning the mobile phone of the users by the angular velocity sensor of the mobile phones, and the other available operation action in the technical field. Specifically, the preconfigured strategy can be used based on the image display interface and the distance changing between the three-dimensional model which is used for zooming in or out. When the intersection angle of image display interface and three-dimensional model are changed, it rotates the three-dimensional model. The view shifting for the user in the three-dimensional environment differs from that in the traditional two-dimensional environment, which is closer to the physical shopping experience and improves the shopping experience thereof.

In the embodiment of the present invention, a three-dimensional model constitutes a virtual block of the three-dimensional shopping platform. While the model unit on the three-dimensional model of three-dimensional shopping platform specifically stands for each virtual shop. Furthermore, each model unit is set with an first display area and an second display area which are used to display the shop's information and the second three-dimensional model. A second three-dimensional model stands for a virtual commodity. The users can see different content by the corresponding operation. Under the scene of the three dimensional model, a panoramic view of the virtual block is achieved. When each camera lens is close to each virtual shop, the users can see the specific virtual shop and the displayed information. And when the camera is close, the image display interface matches the preconfigured operation of the model unit, i.e., the virtual shop, the user enters into the model unit, i.e., enters into the virtual shop, and sees the virtual commodity inside which is the second three-dimensional model in the second display area.

In the embodiment of the present invention, it also includes a memory module. The memory module are preconfigured with the three-dimensional shopping platform model units, as well as the basic data used for assembling the three-dimensional model. The three-dimensional shopping platform display system can therefore assembles the basic data that stored in the memory module and model unit into the different corresponding three-dimensional block model.

In the embodiment of the present invention, the memory module also includes the information of the shop and of the commodity displayed in the first display area and the second display area, where the said information is in the forms of the first data series, the second data series and third data series. The first data series mainly consists of all the virtual shop's information in the first class information in a virtual block. Namely, under a panoramic view of the virtual block mode, the information of the virtual shop displayed in the image display interface is content of the first data series. Therefore, the first data series does not contain much data. In a specific embodiment, the first class information just comprises the information which is necessary to be displayed in blocks in the panoramic view mode. Preferably, the first class information may include the information of every virtual shop's name and the updated information. Consequently, the data information of the first data series is not very large. In the environment of the virtual block panoramic view, the image display interface will not be disordered due to the complexity of the displayed content thereof. It cleans the display interface, reduces the system cost and keeps the system running smoothly. More specifically, the virtual shop's name information can be set in the top of the display area of the model unit relevant to the virtual shops in the first display area. Consequently, it is convenient for the users to find the shop even in a panoramic view mode of the virtual block. In another better embodiment, the updated information of virtual shop can be presented via the color scheme in the specific location of the first display area in the model unit, where for example, the outer glow or highlighting is assembled into the display area to display the image data, or a frame displaying animation where scrolling marquee displays in the first display area of the model unit relevant to the virtual shops, i.e., differing from the other virtual shop information through an eye-catching way in order to attract user's attention.

The second data series consists of multiple subclasses in the second class information, which is used to store the virtual shop's information. Each subclass of the second data series corresponds to a virtual shop in the virtual block. It corresponds to the label of the virtual shops in the first data series, and includes the second class information of the virtual shop. Each subclass of the second class information corresponds to a lot of the information of the virtual shop, whose data volume is relatively bigger. It is inconvenient for the subclass to be entirely read under the panorama mode.

The second class information of the virtual shop relevant to the model unit displayed in the image display interface is read from the subclass relevant to the second data series in the close view mode, which improves the operation efficiency of the system. In an embodiment, the second class information includes but not limited to the information of the virtual shop commodity, the update information and the promotion information, where it further displays the information about each virtual shop. The owner of the virtual shop can issue the second class information displaying the new arrival commodity, the discounting information and other specific content of the information for the reference of the users. The said displaying is very close to the physical shopping environment which improves the shopping experience. In a better embodiment, the second information is displayed in the outside surface of the model unit relevant to the virtual shop or on the attached object of the preconfigured model units, where the outside surface and the attached objects of the model unit can be used to display the outer walls and advertising facilities of the virtual shop.

The third data series is set with a plurality of the commodity information used for store each virtual shop. The third data series is corresponding to the a virtual shop respectively, and is corresponding to the subclass of the second data series respectively. The data of the third data series is corresponding to each virtual commodity of the virtual shop. The commodity information is displayed by text or by picture. For example, in a virtual shop, the different commodity displayed as the second three-dimensional model are selected based on the different categories of the commodity. The other content of the commodity is displayed on the respective position of the second three-dimensional model, such as the color, the design and label of the commodity.

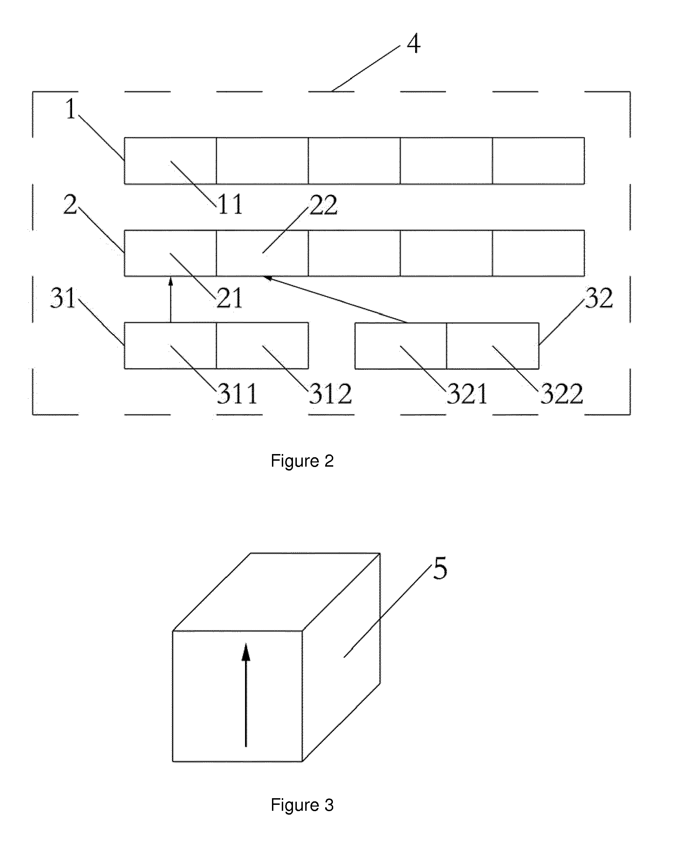

As shown in Figure 2, a First Data Series 1 and the corresponding Second Data Series 2 as well as the multiple Third Data Series (31, 32) relevant to Second Data Series 2 jointly form a Data Model 4. The third data series can further include much more without limitation to the said two herein. Third Data Series 31 stores Commodity Information 311 and Commodity Information 312, which is relevant to Second Subclass 21 of the second data series. Third Data Series 32 stores Commodity Information 321 and Commodity Information 322, which is relevant to the second data series of Subclass 22. Likewise, the number of Third Data Series 31 and Third Data Series 32 is an example, and it can contains much more commodity information. A plurality of Data Model 4 shall be set when the same are used to correspond to the multiple different blocks, and each Data Model 4 shall correspond to the three-dimensional model respectively. Data Model 4 shall be switched when the blocks are being shifted.

In the embodiment of the present invention, it further includes a data updating module. The data updating module successively updates the shop information and commodity information displayed in the first display area and the second display area in the model unit of the image display interface with the changing of the contents in the image display interface. Specifically, the updating method is a successive updating method, i.e., successively updating the relevant shop information and commodity information based on the displayed content of the image display interface. As mention above, the first data series, the second data series, and the third data series are respectively corresponding to the shop information and the commodity information. Therefore, the updating of the shop information and the commodity information is realized by updating the first data series, the second data series, and the third data series.

In the embodiment of updating the first data series, the first data series relevant to the current virtual block is updated by a first preconfigured update method and the shop name and the updated information of the virtual shop relevant to the first data series are displayed in the specific location of the first display area in the model unit of the image display interface when the image display interface displays the panoramic virtual block. Alternatively, when the user enters into the virtual block panoramic display interface, the image display interface will update the first data series. Consequently, under the panoramic view of the virtual block interface, it displays the first class information of the shop information of the virtual shop relevant to the first data series, such as the shop name and the updated information.

In the embodiment of updating the relevant subclass of the second data series, the image display interface displays the part of the virtual block when the users switches the image display interface to the close view mode by the specific operation action. Simultaneously, the subclass of the second information in the second data series relevant to the virtual shop displayed in the current image display interface is updated by a second preconfigured update method, and shop information, such as the commodity update information and the promotion information relevant to the subclass of the second information is displayed in the specific location of the first display area of the model unit in the current image display interface. The image display interface displays the part of the virtual block, but not the entire virtual block. Therefore, in this updating method, what is updated here is just the subclass of the second information relevant to each virtual shop in the current image display interface is updated, but not the entire second data series.

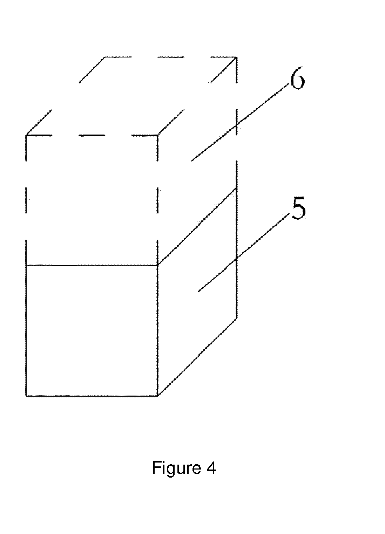

When the image display interface displays the panoramic view of the virtual block, it is available to update the subclass of the second data series. In another embodiment for updating the second data series, the image display interface updates the subclass of the second information of the operated virtual shop relevant to the second data series by the second preconfigured update method and adds a third display area in the operated model unit where the information of the subclass of the second information, such as the commodity update information and the promotion information are displayed when the image display interface displays the panoramic virtual block, and the three-dimensional display system determine that the user's operation to a model unit matches the preconfigured operation by the motion capturing module. As shown in Figure 3, in a specific embodiment, the preconfigured operation can be set as the user operates Model 5 relevant to the specific virtual shop in the image display interface with the operation trail upward, i.e., the motion of dragging up the virtual shop. As shown in Figure 4, the user's operation changed Model Unit 5 relevant to the virtual shop, i.e., added relevant Section 6 presented in the dotted line, increased the height of Model Unit 5 and consequently, added the third display to the model unit where the information of subclass of the second information is displayed. The third display area can be the outside surface of the added Section 6 relevant to the virtual shop in Figure 4. Consequently, when displaying the panoramic virtual block in the image display interface, the subclass of the second information designated by the user in the second data series is updated, and it is not necessary to shift the image display interface into the close view of the virtual block. The user can directly check the further second information after seeing the updated information of the first information in the panoramic view, which is convenient consequently.

In the embodiment of updating the subclass relevant to the third data series, when the user enters into the model unit, i.e., when the image display interface display the inside scene of the virtual shop, it updates the third data series of the virtual commodity relevant thereto, and displays the commodity information relevant to the third data series in the specific location of the second display area of the model unit therein. For example, , when the user enters into a virtual shop, the commodity information of the third data series of the virtual commodity relevant to the virtual shop is updated and further display the said commodity information will be displayed in the relevant position of the second display area in the second three-dimensional model.

Further, the third data series relevant to each virtual shop can be divided into the fourth data series and the fifth data series. The fourth data series is corresponding to the basic information of the commodity information, such as the choice of the second three-dimensional model, the commodity's name and the inside display position of the virtual shop and so on, which can be understood as the inside display of the virtual shop. The fifth data series mainly consists of the subclass storing of all the specific commodities. When the user enters into the model unit by the operation action, the fourth data series is updated and the inside display of the virtual shop is updated consequently. Further, the subclass of the commodity relevant to the fifth data series is updated when the user designates the second three-dimensional model relevant to the commodity by a further operation action. The further dividing of the third data series can decrease the cost of the mobile terminal and can decrease the cost of the network connection and of the system used for data updating thereof.

The data updating is realized by the above mentioned data updating modules. The data updating module is connected the remote server by a communication module, where the data updating module acquires the updating date and stored the updating data into the memory module. The updating data is corresponding to the first data series, to the subclass of the second class information of the second data series and to the third data series, consequently, the different data is updated relevant to the first preconfigured update method, to the second preconfigured update method and to the third preconfigured update method. Taking the updating of the first data series for example, a three-dimensional image display system searches the updating label of the first data series in the remote server by the date updating model and performs the relevant operations. When the updating label relevant to the first data series is found in the remote server, the mobile terminal sends an updating request relevant to the first data series to the remote server, and the server sends out the update data. The updating label is an updated version number. The updating label is determined by comparing the local version number with the version number in the remote server. When the updating label relevant to the first data series is not found in the remote server, it indicates that the content of the first data series is not updated, and the three-dimensional shopping platform system reads the first data series stored in the local mobile terminal, where if the record of the first data series is found in the local memory module, the same will be read and displayed into the first display area. When the first data series is not stored in the mobile terminal, the terminal sends an updating request of the first data series to the remote server, and the server sends out the update data. There are a plurality of virtual blocks. The reason why the first data series is not found in the mobile terminal is that the user was not interested in or did not visit the virtual block. Hence, the terminal sends a date updating request to the remote server.

In the updating the second data series, the subclass thereof is updated as a unit. The remote server set a updating label to a subclass. The updating is just for updating one or several subclasses, i.e., updating the subclass in the number relevant to the displayed model unit(s) in the image display interface. The data size in the second data series is much bigger than that of the first data series. It is not convenient to store the entire second data series into the local mobile terminal, where some virtual shop relevant to the subclass is never visited, which is not necessary to be stored. It accelerates the updating speed, smoothes the system and saves the local storage resources by updating of the subclass to the virtual shop relevant to the model unit in the image display interface. Further, it set the storage size in the memory module for use of store the second data series. The subclass of the second data series is eliminated in the logic of first in and first out or least visit and first out.

In the updating method of the third data series, the updating unit is the entire data series, which is similar with that of the first data series. The difference between the said two method is the updating content, which will not be further explained here. When the third data series is divided into the fourth data series and the fifth data series, the updating method of fourth data series applies the updating method of the first data series where the updating entrance is just changed into the entrance into the inside the model unit, and the updating method of the fifth data series applies the updating method of the second data series where the updating entrance is just changed into the second three-dimensional model relevant to the operated commodity. When the remote server receives the updating request, it distributes the updating serial number based on the updating request, and sends out the updated data to the different mobile terminals by the updating serial number.

By the above mentioned successive and step-by-step updating method to the three-dimensional shopping platform, it can prevent that the image display interface displays too much information of the virtual shop and of the commodity and can clean the image display interface. On the other hand, it also effectively decreases the amount of the updating data and the saves of the mobile terminal system resources. The updating method of three-dimensional shopping platform realizes the issuing of the relevant information thereon and the update connecting of the issuing platforms, and improves the convenience and efficiency thereof. The updated content is displayed on the three-dimensional display shopping platform, which results in an intuitive appearance of update contents and improves the visual effect and reality, as well as the online shopping experience.

It is obvious for the skilled in the art to make varieties of changes and modifications after reading the above descriptions. Hence, the Claims attached should be regarded as all the changes and modifications which cover the real intention and the range of this invention. Any and all equivalent contents and ranges in the range of the Claims should be regarded belonging to the intention and the range of this invention.

## Claims

1. A method for updating three-dimensional shopping platform, the three-dimensional shopping platform is displayed on a mobile terminal through a three-dimensional shopping platform display system, wherein the three-dimensional shopping platform display system comprises:
a three-dimensional model;
a display module;
a motion capturing module, and
a visual angle switching module, wherein, the visual angle switching module is respectively connected to the display module and the motion capturing module;
the display interface is defined with a predetermined size by the display module;
the relative position of the display interface and the three-dimensional model is changed by the motion capturing module in accordance with the user operation, then corresponding command instructions is sent to the visual angle switching module; the three-dimensional model is adjusted by the visual angle switching module through a preconfigured strategy in accordance with the command instructions of the motion capturing module;
the different image data in the display interface is displayed by the visual angle switching module; the image data is a plane projection of the three-dimensional model in the display interface;
the memory module is provided which is preconfigured with a Model Unit (5) of the three-dimensional shopping platform and the basic data for assembling the three-dimensional model; the different three-dimensional models are assembled by the three-dimensional shopping platform display system according to the basic data and the Model Unit (5);
the three-dimensional model is used for indicating virtual block of the three-dimensional shopping platform; the Model Unit (5) is used for indicating the virtual shop of the three-dimensional shopping platform;
the Model Unit (5) further includes first display area for displaying shop information and/or second display area for displaying the multiple second three-dimensional models; the first display area and the second display area are adjusted based on the three-dimensional model; the second three-dimensional model is used for presenting the commodity in the three-dimensional shopping platform display system; Commodity information (311,312,321,322) is presented in the second display area; and
a data updating module is provided which is changed with the display content that presented in the display interface, the data updating module successively updates the information of the shop and the commodity which is displayed on the first display area and the second display area of the Model Unit (5) in the display interface.

2. A method as disclosed in Claim 1, wherein the data updating module is connected to a remote server through a communication module, the update data is achieved by the data updating module from the remote server, and the update data is stored in the memory module through the data updating module.

3. A method as disclosed in Claim 2, wherein it comprises that the memory module stores a First Data Series (1), a Second Data Series (2) and a Third Data Series (31,32);
First Data Series (1) stores a first class information relevant to a virtual block and the shop information of each virtual shop;
Second Data Series (2) consists of the multiple subclasses in the second class information;
Third Data Series (31,32) is used for storing Commodity information (311,312,321,322) of each virtual shop and which is relevant to subclass in Second Data Series (2) respectively.

4. A method as disclosed in Claim 3, wherein the first class information comprises the virtual shop's name and the updated information;
the second class information comprises the update information of the virtual shop commodity and the promotion information.

5. A method as disclosed in Claim 4, wherein it comprises that when the image display interface presents the virtual block, it updates First Data Series (1) relevant to the current virtual block by the first update setting, and First Data Series (1) relevant to the virtual shop's name's information and the updated information are displayed in the specific location of the first display area in the Model Units of the current image display interface.

6. A method as disclosed in Claim 4, wherein it comprises that when the image display interface displays the virtual block, and the three-dimensional shopping platform system determines that the operation of the users matches the preconfigured operation to a Model Unit (5) by the motion capturing module, the image display interface updates the subclass of the second class information relevant to the operated virtual shop in Second Data Series (2) by the second update setting, and a third display area is added onto the operated Model Unit (5)e where the second class information of the virtual shop relevant to the subclass of the second information.

7. A method as disclosed in Claim 4, wherein it comprises that when the image display interface displays the part of the virtual block, it updates the subclass of the second class information relevant to the current virtual shop in Second Data Series (2) by the second update setting, and the updated Commodity information (311,312,321,322) and promotion information relevant to the subclass of the second class information are displayed in the specific location of the first display area in the Model Units of the current image display interface.

8. A method as disclosed in Claim 4, wherein it comprises that when the image display interface displays the inside scene of the virtual shop, it updates Third Data Series (31,32) relevant to the virtual commodity in the image display interface by the third update setting, and Commodity information (311,312,321,322) relevant to Third Data Series (31,32) is displayed in the specific location of the second display area in current image display interface.

9. A method as disclosed in Claim 4, wherein the three-dimensional shopping platform display system presents the updated information of virtual shop in the specific location of the first display area in the Model Units relevant to each virtual shop via the color scheme.

10. A method as disclosed in Claim 4, wherein it comprises that the three-dimensional shopping platform system displays the information of the virtual shop's name in the top area of the Model Units relevant to each virtual shop in the first display area.

11. A method as disclosed in Claim 5, wherein the first update setting comprises:
the three-dimensional shopping platform system searches the relevant updating label of the first update data series in the remote server by the data updating module;
when the updating label relevant to First Data Series (1) is found in the remote server, the mobile terminal sends an updating request relevant to First Data Series (1) to the remote server, and the server sends out the update data;
when the updating label relevant to First Data Series (1) is not found in the remote server, the three-dimensional shopping platform system reads First Data Series (1) stored in the mobile terminal;
when First Data Series (1) is not stored in the mobile terminal, the terminal sends an updating request of First Data Series (1) to the remote server, and the server sends out the update data.

12. A method as disclosed in Claim 6 or Claim 7, wherein the second update setting comprises:
the three-dimensional shopping platform system searches the relevant updating label of the subclass of the second class information of the displayed virtual shop in the image display interface in the remote server by the data updating module;
when the updating label relevant to the subclass of the second class information is found in the remote server, the mobile terminal sends the updating request relevant to the subclass of the second class information to the remote server, and the server sends out the update data;
when the updating label relevant to the subclass of the second class information is not found in the remote server, the three-dimensional shopping platform system reads the subclass of the second class information stored in the mobile terminal;
when the subclass of the second class information is not stored in the mobile terminal, the mobile terminal sends an updating request of the subclass of the second class information to the remote server, and the server sends out the update data.

13. A method as disclosed in Claim 6, wherein the preconfigured operation is the sliding operation with the operation trail upward after clicking the Model Units relevant to the virtual shop.

14. A method as disclosed in Claim 6, wherein it comprises that a third display area is added into the three-dimensional shopping platform system by changing the outlook of Model Units relevant to the virtual shop.

15. A method as disclosed in Claim 8, wherein the third update setting comprises that:
the three-dimensional image display system searches the relevant updating label of the third update data series in the remote server by the data updating module;
when the updating label relevant to Third Data Series (31,32) is found in the remote server, the mobile terminal sends an updating request relevant to Third Data Series (31,32) to the remote server, and the server sends out the update data;
when the updating label relevant to Third Data Series (31,32) is not found in the remote server, the three-dimensional shopping platform system reads Third Data Series (31,32) stored in the mobile terminal;
when Third Data Series (31,32) is not stored in the mobile terminal, the terminal sends an updating request of Third Data Series (31,32) to the remote server, and the server sends out the update data.
